# EUROPÄISCHE PATENTSCHRIFT

(11) **EP 2 506 375 B1**
(45) Veröffentlichungstag und Bekanntmachung des Hinweises auf die Patenterteilung: **08.04.2015**
(21) Anmeldenummer: 12162259.1
(22) Anmeldetag: 29.03.2012
(51) Int. Cl.: H02G 3/08, H02G 3/22, H02G 15/007, H02G 15/013

(54) **Zugfeste dichte Befestigung für runde längliche Gegenstände**
Tug-resistant sealed fixture for round long objects
Fixation étanche résistante à la traction pour objets ronds oblongs

(30) Priorität: 29.03.2011 DE 202011000707 U
(43) Veröffentlichungstag der Anmeldung: 03.10.2012
(73) Patentinhaber: Zellner GmbH, 94234 Viechtach (DE)
(72) Erfinder: Klees, Ernst, 80939 München (DE); Kraus, Josef, 94234 Viechtach (DE)
(74) Vertreter: Farago, Peter Andreas

(56) Entgegenhaltungen:
- WO-A2-2006/124409
- DE-A1- 1 911 407
- DE-A1-102008 063 192
- DE-U1-202004 019 698
- GB-A- 2 425 365
- US-A- 2 938 940
- US-A- 3 555 171

## Beschreibung

Die Erfindung betrifft eine zugfeste, dichte Befestigung für runde, längliche Gegenstände in Durchführungen durch Komponentenfluiddichte Zugentlastung für Kabel an Anschlusskomponenten.

Die erfindungsgemäße dichte Befestigung eignet sich besonders für Stecker, Buchsen u. dgl., auch als dichte Zugentlastung.

An Anschlusskomponenten, insbesondere solchen, die zumindest staub- oder feuchtigkeitsdicht sein sollen, werden üblicherweise Kabel über dicht vergossene Zugentlastungen angeschlossen. Derartig vergossene Stecker sind bei vielen Haushaltsgeräten oder aber in feuchter Umgebung eingesetzten Steckern üblich. Dabei ist die Abdichtung an Anschlusskomponenten angeschlossener Kabel schwierig und aufwendig

Es bestehen bereits dichte Zugentlastungen, wobei an einer Anschlusskomponente, wie einem Stecker, einer Buchse u. dgl. zur Einspeisung von Strom ein Verguss besteht. Diese bekannten "dichten" Anschlusskomponenten sind schwierig herzustellen und die Abdichtung Kabelmantel gegen Anschlusskomponentengehäuse ist eine stete Problemstelle.

So sind aus DE 1911407, EP 1022834 A1, US7087838B2, EP695900 A1, DE 8135327 U1 oder auch EP 175236 A2 komplexe Dichtungssysteme für Kabelführungen an Steckern bekannt geworden, die aufwendig zu installieren, aufwendige Materialien und viele Einzelteile einsetzten.

Es ist daher die Aufgabe der vorliegenden Erfindung, eine gegenüber dem Stand der Technik verbesserte dichte Befestigung vorzuschlagen. Insbesondere soll eine einfache Herstellbarkeit zur Vermeidung von Ausschuß und besserer Qualität erzielt werden.

Die Aufgabe wird durch eine zugfeste, dichte Befestigung für runde längliche Gegenstände in Durchführungen, die eine in der Komponente vorgesehene Durchführung für den runden länglichen Gegenstand mit Dichtungsauflage, die einen etwa gleichen Innendurchmesser wie ein entsprechender länglicher runder Gegenstand besitzt, eine elastische V-Dichtung mit einer Innenöffnung entsprechend dem Durchmesser des runden länglichen Gegenstandes zum Aufbringen auf den Aussenmantel des runden länglichen Gegenstandes wobei die Außenseite des "V" auf der Dichtungsauflage der Durchführung aufliegt; eine Dichtungspresseinrichtung, welche die V-Dichtung gegen den Aussenmantel des länglichen runden Gegenstands in der Durchführung und die Durchführungsinnenwand aufspreizt und somit dagegen abdichtet und daran befestigt und eine Festlegungseinrichtung, welche die Dichtungspresseinrichtung in einer Position festlegt, gelöst.

Bei einer Ausführungsform ist die Festlegungeinrichtung eine in die Komponentendurchgangsöffnung unter Aufspreizen der V-Dichtung einschraubbare Spreizhülse mit Überwurfmutter auf dem runden länglichen Gegenstand, wobei ein der Überwurfmutter entsprechendes Gewinde an der Komponente ausgebildet ist. Diese Ausführungsform hat den Vorteil der Lösbarkeit - ggf. kann die Verbindung zwischen der Komponente und dem runden länglichen Gegenstand wieder einfach durch Aufdrehen der Mutter gelöst werden.

Falls eine besonders dichte, aber nicht mehr schadenfrei öffenbare Verbindung gewünscht wird, kann die Festlegungseinrichtung ein aushärtbares Polymer sein, das nach Eindrücken in die V-Dichtung gehärtet wird und derart die V-Dichtungswände dichtend gegen die Durchführungsinnenwand sowie den Mantel des runden länglichen Gegenstands drückt.

Die Erfindung eignet sich besonders zur Befestigung von runden länglichen Gegenstanden, wie Stangen, Rohren, Kabeln, Leitungen, Rundstäben.

In vielen Fällen ist es angebracht, dass das Spritzguss-Umspritzungsmaterial ausgewählt ist aus der Gruppe bestehend aus thermoplastischen Elastomeren und Polyvinylchlorid.

Es kann günstig sein, wenn das Aussenmaterial der Anschlusskomponente ein geometrisch druckstabiles festes Kunststoffmaterial ist.

Vorteilhaft kann sein, dass das druckstabile Kunststoffmaterial ein faserverstärkter Kunststoff ist.

Wichtig ist aber auch, dass das Umspritzungsamterial ein dauerelastisches thermoplastisches Elastormer ist, das am druckstabilen Kunststoffmaterial der Anschlusskomponente und am Kabelmantel nach dem Spritzguss zum Stecker/Kabelverguss dichtend haftet.

Es ist empfehlenswert, dass das Anschlusskomponententgehäuse einen polaren, hochfesten Kunststoff, ausgewählt aus Polycarbonat, Epoxid, Polypropylencopolymeren, einem Metall oder einem ähnlich harten Stoff ausgebildet ist.

Vorteilhafte Weiterbildungen ergeben sich aus den abhängigen Ansprüchen. Bevorzugt ist die Zugentlastung Teil einer Anschlusskomponente, eines Steckers, einer Buchse.

Es ist günstig, wenn die V-Dichtung aus einem elastischen Kunststoff hoher Shore-Härte besteht. Eine Außenkante des "V" wird durch den Druck im Spritzgusswerkzeug dichtend in/an den Kabelmantel ein/angedrückt und haftet aber nicht am Umspritzungsmaterial . Die andere Kante des "V" wird dicht an die Kabeldurchführungsinnenwand gedrückt. So kann sich der harte Kunststoff des "V" aufgrund des in das V aufgebrachten Spritzgussdruckes aufweiten, in den Kabelmantel "krallen" und diesen so festlegen, während sich die Aussenseite der Kante des durch den Spritzguss aufgespreizten "V" der Dichtung dichtend gegen die Innenwand des Kabeldurchlasses spreizt und sich so im der Kabeldurchlass für das Kabel befestigt. Die Spritzgussmasse haftet bevorzugt nicht am Material der V-Dichtung, welche dadurch über den Spritzgussvorgang geringfügig bewegbar und nicht durch Adhäsionskräfte behindert ist. Dadurch ist das Innere der Anschlusskomponente vor Eindringen von Spritzgusskunststoff geschützt und gleichzeitig vor dem Eindringen von Feuchtigkeit, Staub od. dgl.

Bevorzugt haftet das Spritzguss-Umspritzungsmaterial adhäsiv und dicht am Kabelmantel, auf dem Material der Kabeldurchführung und Außenmaterial der Anschlusskomponente. Durch dieses Anhaften wird die Dichtigkeit des Kabels in der Kabeldurchführung gewährleistet.

Bevorzugt ist das Spritzguss-Umspritzungsmaterial ausgewählt ist aus der Gruppe bestehend aus thermoplastischen Elastomeren, wie SEBS, thermoplastischen Polyestern und Polyvinylchlorid.

Es ist besonders vorteilhaft, wenn das Außenmaterial der Anschlusskomponente ein geometrisch druckstabiles festes Kunststoffmaterial ist, das aufgrund seiner Formstabilität eine gute Dichtung gegenüber der aufgespreizten V-Dichtung gewährleistet. Für diesen Zweck eignen sich besonders druckstabile Kunststoffmaterialien, wie faserverstärkter Kunststoff. Es kann aber auch aus anderem hochfesten und geometrisch stabilem Kunststoff bestehen, bspw. ausgewählt aus Polycarbonat, Epoxid, Polypropylencopolymeren, Metallen und anderen, dem Fachmann für diesen Zweck bekannten Materialien.

Das Umspritzungsmaterial ist bevorzugt ein dauerelastisches thermoplastisches Elastomer, das am druckstabilen Kunststoffmaterial der Anschlusskomponente und am Kabelmantel unter Ausbildung eines Knickschutzes nach dem Spritzguss zum Stecker/Kabelverguss dichtend haftet.

Ein Verfahren zur Herstellung einer erfindungsgemässen dichten Zugentlastung für Kabeldurchführungen weist auf: Aufstecken einer V-Dichtung auf ein Kabelende, wobei zwischen Kabelaussenmantel und V-Dichtung Reibung besteht; Einziehen des Kabelendes mit aufgesetzter V-Dichtung in einen Anschlusskomponenten- Kabeldurchlass, in dem eine Dichtungsauflage ausgebildet ist; Einlegen des Anschlusskomponentengehäuses mit eingebrachtem Kabelende und V-Dichtung in ein Spritzgusswerkzeug und Umspritzen des Anschlusskomponentengehäuse-endabschnittes unter Ausfüllen des Innenraums der im Kabeldurchlass vorhandenen V-Dichtung im Kabeldurchlass unter Druckausübung auf die V-förmige Vertiefung so, dass die V-Dichtung so aufgeweitet wird, dass die V-Dichtungskante in dichtenden Kontakt mit dem Kabelmantel und der Anschlusskomponenten-Kabeldurchlassinnenwand auf die Dichtungsauflage gedrückt wird, sodass nach dem Entformen ein fluiddicht umspritzter zugentlasteter Kabelanschluss mit V-Dichtung an der Anschlusskomponente gebildet ist und kein Spritzgusswerkstoff am "V" vorbei in das Innere des Anschlusskomponentengehäu-ses dringt.

Somit wirkt in einfacher Weise die V-Dichtung sowohl als Zugentlastung: sie "krallt" sich mit ihrer Innenkante in den Kabelmantel und legt sich aufgespreizt durch den Spritzgussdruck gegen die Kabeldurchführungsinnenwand. Dadurch ist der Kabelmantel fest mit dem Anschlusskomponentengehäuse verbunden. Sie dichtet über diese beiden Kanten aber auch das Anschlusskomponentengehäuse gegen Eindringen von Spritzgusskunststoff ab. So ist es möglich, ohne weiteren Aufwand wie Kabelbinder, Überwurfmuttern, Dichtungsauskleidungen und mehr in einfacher Weise sowohl eine Abdichtung als auch die Festlegung des Kabels am Anschlußkomponentengehäuse zu bewirken.

Bevorzugt ist das Anschlusskomponentengehäuse rund, wie auch der Kabeldurchlass für das Kabel und das Kabel selbst. So kann eine runde V-Dichtung eingesetzt werden und sich in der Anordnung der aufgebrachte Spritzdruck über den Spritzgußkunststoff gleichmässigst verteilen.

Nachfolgend wird anhand der beiliegenden Zeichnung ein Ausführungsbeispiel, auf welche die Erfindung allerdings keinesfalls eingeschränkt ist, sowie deren Verwendung näher beschrieben. Es zeigen
Fig. 1 eine Ansicht von Herstellungsschritten der dichten Zugentlastung in perspektivischer Darstellung
Fig. 2 die Ansicht von Herstellungsschritten der dichten Zugentlastung in seitlicher Ansicht;
Fig. 3 eine Ansicht von Herstellungsschritten der dichten Zugentlastung im Längsschnitt;
Fig. 4 eine Ansicht der fertigen umspritzten Anschlusskomponente im Längsschnitt,
Fig. 5 eine perspektivische Ansicht der fertigen umspritzten Anschlusskomponente; und
Fig. 6 eine Längsschnittansicht des Aufweitungsvorgangs der V-Dichtung nach dem Spritzguss.
Fig. 7a - f eine Ausführungsform einer allgemeinen Befestigung eines runden länglichen Gegenstandes in einer Komponente in verschiedenen Darstellungen.

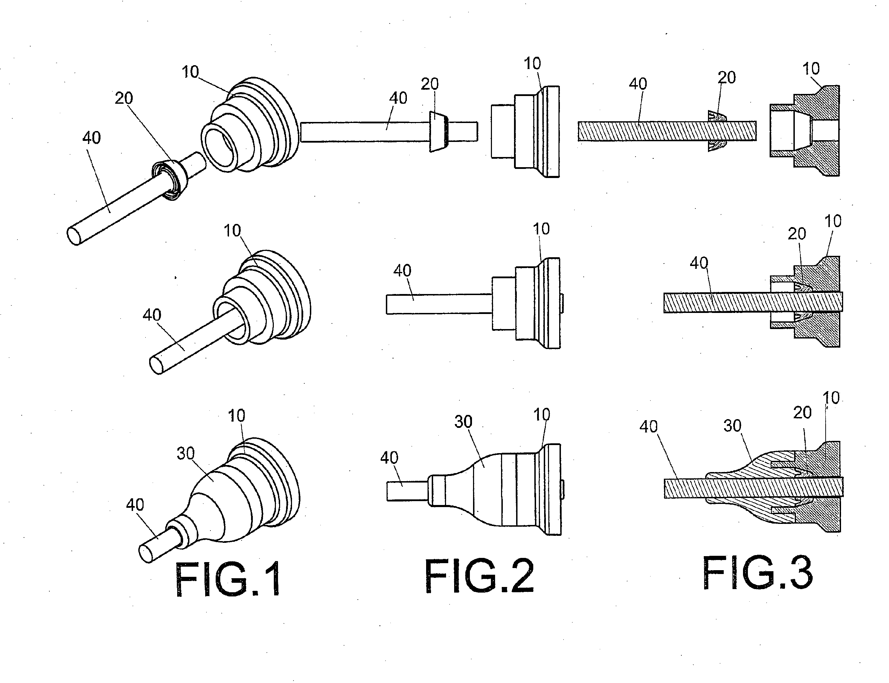

In Fig. 1, 2 und 3 ist der Zusammenbau einer Anschlusskomponente mit erfindungsgemässer Befestigung, hier einer Zugentlastung für Kabel-Anschlusskomponenten, in verschiedenen Ansichten gezeigt. Oben ist das Kabel 40 mit aufgesetzter V-Dichtung 20 kurz vor dem Einbringen in die Anschlusskomponente 10 dargestellt, wobei das Kabel 40 mit dem Kabeldurchlass 12 der Anschlusskomponente 10 fluchtet.. In der Darstellung darunter ist das Kabel mit V-Dichtung bereits in den Kabeldurchlass der Anschlusskomponente eingesetzt, sodass die V-Dichtung im Kabeldurchlass 12 liegt, wie deutlich aus Fig. 3 ersichtlich ist, wobei die Dichtung 20 auf der Dichtungsauflage der Anschlusskomponente 10 zu liegen kommt. In der untersten Darstellung der Fig. 3 ist im Längsschnitt gezeigt, wie der aufgespritzte Kunststoff 30 das Innere der V-Dichtung 20 ausfüllt und am Kabelmantel anliegt, während sich die Aussenkanten der V-Dichtung in die Kabeldurchlassinnenwand und den Kabelmantel krallen und in dieser Lage durch den Spritzgusskunststoff 30 gehalten werden.. In Fig. 2 ist eine seitliche Ansicht der Anordnung gezeigt.

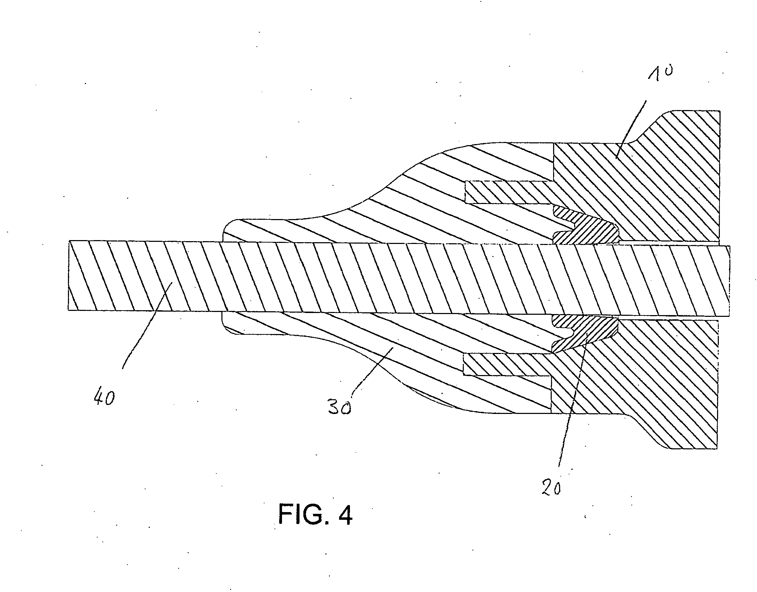

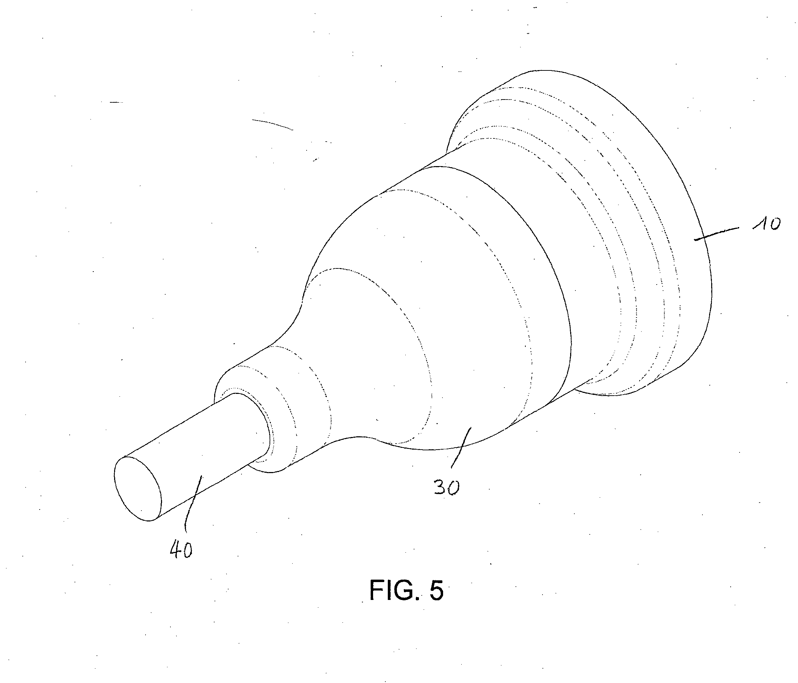

In Fig. 4 ist in vergrösserter Darstellung der Längsschnitt des fertigen Kabelvergusses gezeigt. Hier sieht man deutlich, wie das Kabel 40 in der Anschlusskomponente nach Durchsetzen der V-Dichtung mit Spiel in der Anschlusskomponentendurchgangsöffnung verläuft, während es in der V-Dichtung fest durch das aufgespreitzte "V" durch dessen Kanten befestigt ist. Die V-Dichtung liegt hier im Bereich des Inneren der Anschlusskomponente nicht mehr formschlüssig am Kabelmantel an, sondern hat einen vollständigen Kontakt nur im oberen Bereich des "V". In Fig. 5 ist das fertige Anschlusskomponententeil in einer rückwärtig-perspektivischen Ansicht dargestellt. Deutlich ist das in den dichten Verguss 30 eintretende Kabel 40 erkennbar, das in der Anschlusskomponente 10 aufgenom-men wird.

Der Umspritzungskunststoff 30 legt nun diese Anordnung nach seinem Festwer-den fest und schafft so eine dichte Zugentlastung mit einfachsten Mitteln - ohne Einsatz von Schrauben, aufwändigen Einzelteilen od. dgl. und ermöglicht somit eine erheblich schnellere und wenig aufwendige Herstellung derartig dichter und zugfester Kabelanschlüsse an Anschlusskomponenten.

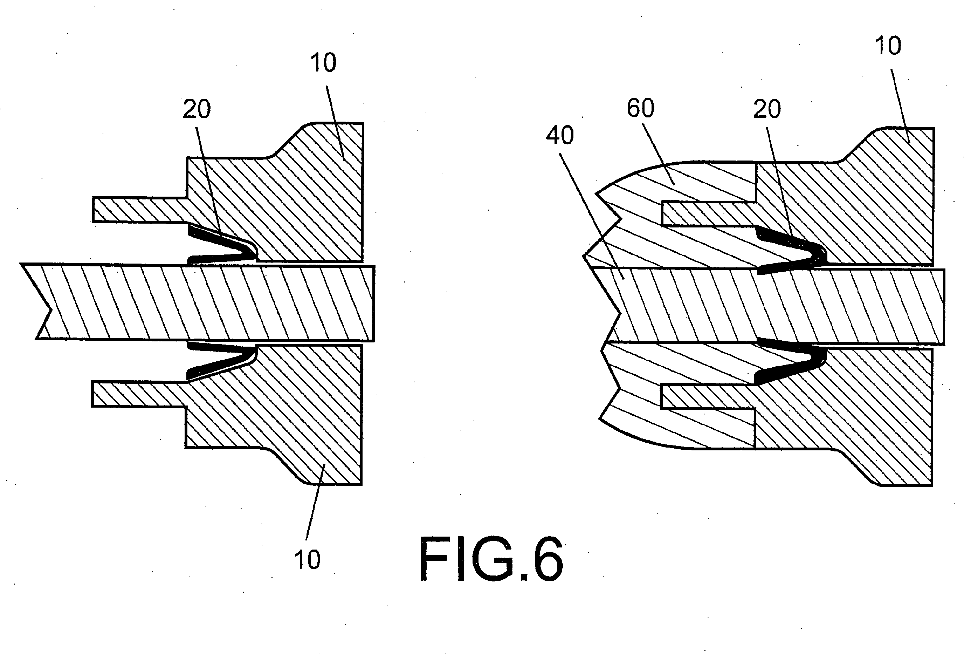

In Fig. 6 ist die Aufweitung der V-Dichtung nochmals detaillierter schematisch gezeigt. Oben in der Figur 6 ist die Anordnung des Kabels 40 in der Durchgangsöffnung 12 mit eingelegter, auf dem Dichtabsatz liegender V-Dichtung gezeigt. Man erkennt deutlich Zwischenräume zwischen den V-Dichtungskanten und dem Kabelmantel sowie der Durchgangsöffnungsinnenwand. Unter dieser Figur ist nun die umspritzte Anschlusskomponente gezeigt. Man erkennt deutlich, dass sich die Kanten des "V" abdichtend gegen die Durchgangsöffnungsinnenwand und den Kabelmantel aufgeweitet haben und so den Kabelmantel in der Anschlusskomponente zugsicher festlegen. Der Spritzgusswerkstoff 30 ist nur in das Innere des "V" eingedrungen und hat dort so das "V" aufgeweitet und in dichtenden Eingriff gebracht.

Allgemein ist die Erfindung aber keineswegs auf zugentlastete, feuchtigkeitsdichte Verbindungen und Anschlüsse von elektrischen Steckkomponenten eingeschränkt, sondern sie eignet sich generell für die (dichte) Befestigung von runden, länglichen Gegenständen, wie Rohren oder Kabeln, in Durchlässen in einer Komponente.

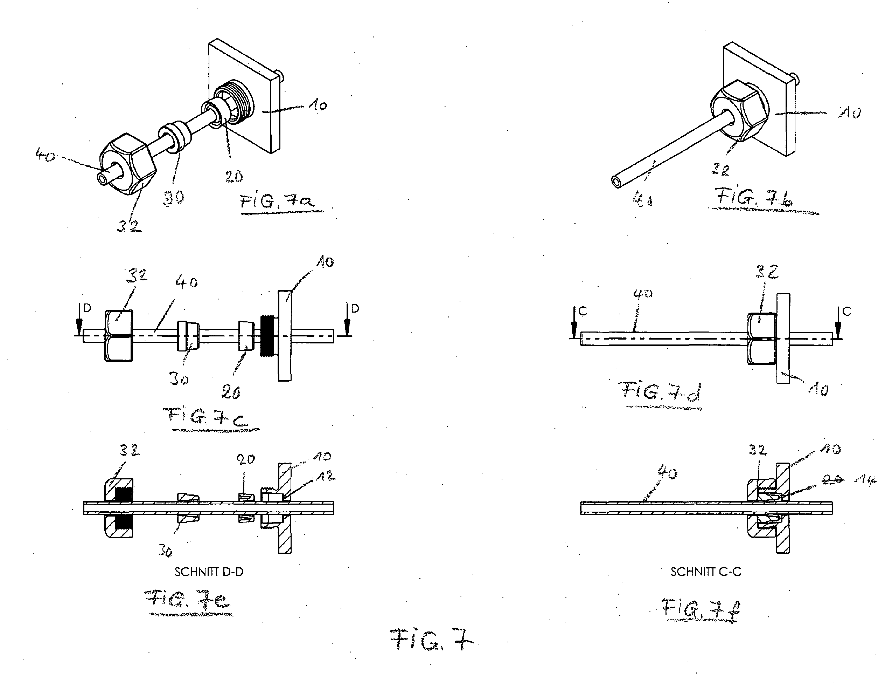

In Fig. 7 ist eine generellere Ausführungsform der Erfindung gezeigt. Dort wird ein Rohrstück in einer Komponente dicht befestigt. Dazu weist die Komponente 10 eine Durchführung mit Anschlag 14 auf. Die Verbindungseinrichtung weist die V-Dichtung 20, ein Gewinde auf der Komponente 10, eine Spreizhülse 30 - die hier getrennt von der Überwurfmuter 32 gezeigt ist, auf, wie aus der Explosionsdarstellung der Fig. 7a ersichtlich. In Fig. 7 ist die zusammengebaute Befestigung perspektivisch dargestellt. Fig. 7c vemittelt einen Längsschnitt durch die einzelnen Ausgangsbestandteile der Befestigung - deutlich sieht man die Komponente 10, die hier als wandartiger Abschnitt gezeigt ist, mit darauf aufgebrachtem Gewinde für die Überwurfmutter 32. Dieses Gewinde muss aber keinesfalls in dieser Form auf der Komponente 10 aufgebracht sein - es kann ebenso ein Gewinde innerhalb des Durchlasses 12 vorgesehen sein, abhängig von der Stärke der Komponente 10. In den Durchlass wird nun die auf das Rohrstück 40 aufgeschobene V-Dichtung 20 sowie dann die Spreizhülse 30 eingedrückt und mit der Überwurfmutter 32 befestigt.

Dabei wird, wie aus dem Längsschnitt der Darstellung in Fig. 7e und Fig. 7f zu sehen, die V-förmige Dichtung 20 durch die Spreizhülse 14 im Kabeldurchlass 12 aufgeweitet und verkeilt sich gegen die Seitenwände der Durchgangsöffnung der Komponente 10 sowie den Aussenmantel des Rohrs 40. Diese Anordnung wird durch die auf das Gewinde der Komponente 10 aufgeschraubte Überwurfmutter 32 befestigt, so dass das Rohr 40 nun dicht in der Durchgangsöffnung 12 geführt und befestigt ist.

Obige Beschreibung offenbart lediglich eine exemplarische Ausführungsform der Erfindung. Dem Fachmann ist aus der Beschreibung und den beigefügten Zeichnungen und Patentansprüchen offensichtlich, dass verschiedenste Veränderungen, Modifikationen und Variationen innerhalb des Schutzbereichs der Ansprüche möglich sind.

### Bezugszeichenliste

- 10: Komponente
- 12: Durchlass von 10
- 14: Dichtungsauflage in 12
- 20: V-Dichtung
- 30: Festlegungseinrichtung, Verguß, Spreizhülse
- 32: Überwurfmutter
- 40: runder länglicher Gegenstand, Kabel

## Patentansprüche

1. Zugfeste, dichte Befestigung für runde längliche Gegenstände in Durchführungen durch Komponenten,
die eine in der Komponente (10) vorgesehene Durchführung (12) für den runden länglichen Gegenstand (40) mit Dichtungsauflage (14), die einen etwa gleichen Innendurchmesser wie ein entsprechender länglicher runder Gegenstand (40) besitzt, aufweisst,
gekennzeichnet durch eine elastische V-Dichtung (20) mit einer Innenöffnung entsprechend dem Durchmesser des runden laenglichen Gegenstandes zum Aufbringen auf den Aussenmantel des runden länglichen Gegenstandes (40), wobei die Außenseite des "V" auf der Dichtungsauflage (14) der Durchführung (12) aufliegt;
eine Dichtungspresseinrichtung (30), welche die V-Dichtung (20) gegen den Aussenmantel des länglichen runden Gegenstands (40) in der Durchführung (12) und gegen die Durchführungsinnenwand aufspreizt und somit dagegen abdichtet und daran befestigt; und
eine Festlegungseinrichtung (32), welche die Dichtungspresseinrichtung (30) in einer Position festlegt.

2. Befestigung nach Anspruch 1, **dadurch gekennzeichnet, dass** die Festlegungseinrichtung (32) eine in die Komponentendurchgangsöffnung unter Aufspreizen der V-Dichtung eindrückbare Spreizhülse (30) ist, die mit einer Überwurfmutter (32) auf dem runden länglichen Gegenstand (40) festlegbar ist, wobei ein der Überwurfmutter (32) entsprechendes Gewinde an der Durchführung (12) der Komponente (10) ausgebildet ist.

3. Befestigung nach Anspruch 1, **dadurch gekennzeichnet, dass** die Festlegungseinrichtung (32) aushärtbares Polymer ist, das nach Eindrücken in die V-Dichtung (20) gehärtet wird und derart die V-Dichtungswände dichtend gegen die Durchführungsinnenwand sowie den Mantel des runden länglichen Gegenstands (40) drückt.

4. Befestigung nach einem der vorangehenden Ansprüche, **dadurch gekennzeichnet, dass** der runde längliche Gegenstand (40) eine Stange, ein Rohr, Kabel, Leitung, Stab ist.

5. Befestigung nach einem der vorangehenden Ansprüche, **dadurch gekennzeichnet, dass**
die Komponente eine Anschlusskomponente mit einer Kabelzuführung (10) mit Dichtungsauflage mit einem Kabeldurchlass (12) etwa gleichen Durchmessers wie ein entsprechendes Kabel (40) ist;
die V-Dichtung (20) eine Innenöffnung entsprechend dem Kabelaussendurchmesser zum Aufbringen auf den Kabelmantel aufweist, wobei das "V" auf die Anschlusseite der Anschlusskomponente (10) weist und die Spitze des "V" auf der Dichtungsauflage der Kabelzuführungsöffnung (12) aufliegt; und
dass als Festlegungseinrichtung (32) eine Spritzguss-Umspritzung (30) auf dem Kabelmantel (40) und auf Außenmaterial der Anschlusskomponente mit Kabeldurchlass (12) dichtend haftet, das "V" der V-Dichtung ausfüllt und aufweitet, so dass die Kanten des "V" gegen die Innenwand des Kabeldurchlasses (12) und gegen den Kabelaussenmantel drücken und so abdichten sowie auf der Dichtungsauflage aufliegen, vorgesehen ist..

6. Befestigung nach Anspruch 1, **dadurch gekennzeichnet, dass** sie Teil einer Anschlusskomponente, eines Steckers, einer Buchse, eines Leitungsanschlusses, ist.

7. Befestigung nach einem der vorangehenden Ansprüche, **dadurch gekennzeichnet, daß** die V-Dichtung (20) aus einem elastischen Kunststoff hoher Shore-Härte besteht, der dichtend durch den Spritzgusskunststoff in/an den Kabelmantel ein/angedrückt ist und nicht am Umspritzungsmaterial haftet.

8. Befestigung nach einem der vorangehenden Ansprüche, **dadurch gekennzeichnet, dass** das Spritzguss-Umspritzungsmaterial adhäsiv und dicht am Kabelmantel, auf dem Material der Kabeldurchführung (12) und Aussenmaterial der Anschlusskomponente (10) haftet.

## Claims

1. Tug-resistant sealed fixture for round long objects in passages through components,
having a passage (12), provided in the component (10), for the round long object (40) with a sealing support (14), having an inner diameter approximately the same as a corresponding long round object (40),
**characterized by** an elastic V-seal (20) with an interior opening corresponding to the diameter of the round long object for placement on the outer sheath of the round long object (40), the exterior of the "V" resting on the sealing support (14) of the passage (12),
a seal pressing device (30) which spreads the V-seal (20) against the outer sheath of the long round object (40) in the passage (12) and against the interior wall of the passage and thus seals against it and fastens thereto, and
a fixation device (32) which fixes the seal pressing device (30) in a position.

2. Fixture according to Claim 1, **characterized in that** the fixation device (32) is an expanding sleeve (30) which can be pressed into the component passage opening with spreading of the V-seal, and which can be fastened on the round long object (40) by means of a union nut (32), a thread corresponding to the union nut (32) being formed at the passage (12) of the component (10).

3. Fixture according to Claim 1, **characterized in that** the fixation device (32) is curable polymer which is cured after having been pressed into the V-seal (20) and thus presses the V-seal walls sealingly against the interior wall of the passage and the sheath of the round long object (40).

4. Fixture according to one of the preceding claims, **characterized in that** the round long object (40) is a rod, a tube, cable, duct, bar.

5. Fixture according to one of the preceding claims, **characterized in that**
the component is a connection component with a cable inlet (10) having a sealing support with a cable duct (12) of approximately the same diameter as a respective cable (40),
the V-seal (20) has an interior opening corresponding to the outer diameter of the cable for placement on the cable sheath, the "V" pointing to the connection side of the connection component (10) and the tip of the "V" resting on the sealing support of the cable duct opening (12), and **in that**
as the fixation device (32) there is provided a die cast molding (30), which seals with cable duct (12), adhering on the cable sheath (40) and on the outer material of the connection component, filling out and expanding the "V" of the V-seal, so that the edges of the "V" press against the interior wall of the cable duct (12) and against the cable outer sheath and thus seal it and rest on the sealing support.

6. Fixture according to Claim 1, **characterized in that** it is part of a connection component, a plug, a bushing, a line terminal.

7. Fixture according to one of the preceding claims, **characterized in that** the V-seal (20) consists of an elastomer with high Shore hardness which is pressed sealingly through the die cast plastic into/on the cable sheath and does not adhere to the molding material.

8. Fixture according to one of the preceding claims, **characterized in that** the die cast molding material adheres adhesively and tightly to the cable sheath, to the material of the cable duct (12) and the outer material of the connection component (10).

## Revendications

1. Fixation étanche résistante à la traction pour des objets oblongs ronds dans des passages à travers des composantes, qui présente un passage (12) prévu dans la composante (10) pour l'objet oblong rond (40) avec un appui de joint (14) qui possède un diamètre intérieur sensiblement égal à un objet oblong rond (40) correspondant,
**caractérisée par** un joint élastique en V (20) avec une ouverture intérieure correspondant au diamètre de l'objet oblong rond destiné à être appliqué sur l'enveloppe extérieure de l'objet oblong rond (40), sachant que le côté extérieur du «V» repose sur l'appui de joint (14) du guide (12);
un dispositif de compression de joint (30) qui écarte le joint en V (20) contre l'enveloppe extérieure de l'objet oblong rond (40) dans le passage (12) et contre la paroi intérieure du passage et le met ainsi en étanchéité contre et en fixation dessus; et
un dispositif d'immobilisation (32) qui immobilise le dispositif de compression de joint (30) dans une position.

2. Fixation selon la revendication 1, **caractérisée en ce que** le dispositif d'immobilisation (32) est un manchon d'écartement (30) pouvant être enfoncé dans l'ouverture de passage de composante en écartant le joint en V, qui est peut être réglé avec un écrou-raccord (32) sur l'objet oblong rond (40), sachant qu'un filet correspondant à l'écrou-raccord (32) est formé sur le passage (12) de la composante (10).

3. Fixation selon la revendication 1, **caractérisée en ce que** le dispositif d'immobilisation (32) est un polymère durcissable par vieillissement qui est durci après avoir été enfoncé dans le joint en V (20) et comprime ainsi la paroi du joint en V en étanchéité contre la paroi intérieure du passage ainsi que l'enveloppe de l'objet oblong rond (40).

4. Fixation selon l'une des revendications précédentes, **caractérisée en ce que** l'objet oblong rond (40) est une barre, un tube, un câble, une conduite ou une tige.

5. Fixation selon l'une des revendications précédentes, **caractérisée en ce que**
la composante est une composante de branchement avec un guide-câble (10) avec un appui de joint avec un passage de câble (12) de sensiblement le même diamètre qu'un câble correspondant (40) ;
le joint en V (20) présente une ouverture intérieure correspondant au diamètre extérieur de câble pour le placement sur l'enveloppe de câble, sachant que le «V» pointe vers le côté branchement de la composante de branchement (10) et la pointe du «V» repose sur l'appui de joint de l'ouverture de guide-câble (12); et
qu'en tant que dispositif d'immobilisation (32) est prévu une extrusion d'enrobage par injection (30) sur l'enveloppe de câble (40) et sur le matériau extérieur de la composante de branchement avec le passage de câble (12) qui adhère de façon étanche, remplit le «V» du joint en V et l'élargit, de sorte que les arêtes du «V» appuient contre la paroi intérieure du guide-câble (12) et contre l'enveloppe extérieure du câble et sont ainsi en étanchéité et reposent sur l'appui de joint.

6. Fixation selon la revendication 1, **caractérisée en ce qu'**elle fait partie d'une composante de branchement, d'une prise, d'une douille, d'un branchement de ligne.

7. Fixation selon l'une des revendications précédentes, **caractérisée en ce que** le joint en V (20) est en matériau élastique de dureté shore élevée, qui est enfoncé/appuyé dans/sur l'enveloppe du câble en étanchéité par le plastique injecté et n'adhère pas sur le matériau d'extrusion d'enrobage.

8. Fixation selon l'une des revendications précédentes, **caractérisée en ce que** le matériau d'extrusion d'enrobage par injection est adhésif et adhère en étanchéité sur l'enveloppe du câble, sur le matériau du guide-câble (12) et le matériau extérieur de la composante de branchement (10).
